# EUROPÄISCHE PATENTSCHRIFT

(11) **EP 0 835 371 B1**
(45) Veröffentlichungstag und Bekanntmachung des Hinweises auf die Patenterteilung: **20.03.2002**
(21) Anmeldenummer: 97921668.6
(22) Anmeldetag: 19.04.1997
(51) Int. Cl.: F02G 1/044, F16H 21/32

(54) **STIRLINGMOTOR-GETRIEBE**
STIRLING ENGINE GEARING
ENGRENAGE POUR MOTEUR STIRLING

(30) Priorität: 24.04.1996 DE 19616256
(43) Veröffentlichungstag der Anmeldung: 15.04.1998
(73) Patentinhaber: SIPRA Patententwicklungs- und beteiligungsgesellschaft mbH, 72438 Albstadt (DE)
(72) Erfinder: LOHRMANN, Tim, D-58239 Schwerte (DE)
(74) Vertreter: Freiherr von Schorlemer, Reinfried, Dipl.-Phys.
(86) Internationale Anmeldenummer: EP9701978
(87) Internationale Veröffentlichungsnummer: WO9740269

(56) Entgegenhaltungen:
- US-A- 2 943 453
- US-A- 4 248 050
- US-A- 4 546 663
- US-A- 4 550 571
- US-A- 4 553 392

## Beschreibung

Die Erfindung richtet sich auf einen Stirlingmotor mit einem beheizbaren Zylinderkopf und mit einem Kühler zum Erhitzen bzw. Kühlen eines Arbeitsmediums sowie mit einem Verdränger- und einem Arbeitskolben, die wirkmäßig eine Abtriebsachse beaufschlagen.

Stirlingmotoren sind in einer Vielzahl von Gestaltungen bekannt, hier sei als Beispiel die DE-40 16 238-C2 als Kombination eines solchen Motors mit einer Heizkesselanlage genannt.

Das Grundprinzip eines solchen Stirlingmotors besteht darin, daß ein konstantes Gasvolumen (heute wird meist Helium eingesetzt) innerhalb der Stirlingmaschine von zwei Kolben hin und her geschoben wird. Auf der einen Seite wird das Helium durch die Flamme eines Gasbrenners in den Erhitzerröhrchen erhitzt und auf der anderen Seite von einem Kühler abgekühlt. Dazwischen befindet sich ein Regenerator, der dem Gas auf seinem Weg von der heißen zur kalten Seite Wärme entzieht und bei Rückströmen wieder zuführt. Ein Getriebe verbindet die beiden Kolben so, daß Leistung z.B. über Generatoren entnommen werden kann. Die Kolben werden dabei im Wechsel parallel oder gegeneinander bewegt, wodurch das Gas durch den einen Kolben komprimiert und nach der Wärmezufuhr durch den anderen wieder entspannt wird.

Neben dem Problemkreis in der Optimierung der Wärmeübertragung liegt ein mechanisches Problem eines solchen Motors u.a. in den Kräften, die die wirkmäßige Verbindung von Verdrängerkolben und Arbeitskolben in Verbindung mit der Abtriebachse beaufschlagen, wobei hier eine sogenannte Beta-Bauweise im Vordergrund steht. Dabei handelt es sich um eine Bauweise, bei der der Verdrängerkolben und der Arbeitskolben hintereinander auf einer gemeinsamen Wirkachse liegen.

Hier muß dafür Sorge getragen werden, daß die Auswuchtung ebenso optimiert wird, wie die Lagerung der rotierenden bzw. oszillierenden Elemente, wobei eine weitestgehende Minimierung der Querkräfte erreicht werden sollte.

Aus der DE-37 23 950-A1 ist eine regenerative Wärmemaschine bekannt mit Exzenterkurbelgetriebe, das aber praktisch in der Wellenachse nicht auswuchtbar ist, da die beiden Exzenter zwar vergleichsweise nahe aneinander angeordnet sind, aber immer noch nebeneinander. Eine andere Lösung zeigt die JP-58-128 441 A, hier besteht ein wesentlicher Nachteil darin, daß das dort offenbarte Exzentergetriebe, soweit erkennbar, statisch überbestimmt ist.

Aufgabe der Erfindung ist daher die Lösung dieser Problempunkte, d.h. es soll für eine ausreichende Auswuchtung ebenso gesorgt werden wie für eine Verhinderung statisch überbestimmter Lager und das Erreichen einer Minimierung der Querkräfte.

Bei einem Stirlingmotor der eingangs bezeichneten Art wird diese Aufgabe gemäß der Erfindung dadurch gelöst, daß die Abtriebsachse mit einer Doppelexzenterscheibe ausgerüstet ist, an der zum einen das Arbeitskolbenpleuel und zum anderen das Verdrängerkolbenpleuel angreifen, wobei beide Exzentrizitäten in der Ebene der Kolbenachse liegen.

Der besondere Vorteil des so aufgebauten Doppelexzenters nach der Erfindung liegt darin, daß die Lagerangriffpunkte der beiden Pleuel beim erfindungsgemäßen Doppelexzenter praktisch ineinander liegen, da sie beide in der Zylinderachsebene angeordnet sind. Damit ist kein Auswuchten in der Wellenachsebene mehr nötig.

Durch die Erfindung wird erreicht, daß eine getriebetechnisch sehr kompakte Bauweise möglich wird. Auch lassen sich die auftretenden, zum Teil gegenläufigen Belastungen durch die Einleitung in die Doppelexzenterscheibe leichter ausgleichen.

Eine zweckmäßige Ausgestaltung der Erfindung besteht darin, daß die Außenseite der Doppelexzenterscheibe dem Arbeitskolbenpleuel und eine exzentrische Bohrung in der Doppelexzenterscheibe dem Verdrängerkolbenpleuel zugeordnet ist. Auch dies führt zu einer kompakten Bauweise, weil es möglich ist, die Lager der Exzenterkolbenscheibe vergleichsweise nah aneinander zu rücken.

Die Erfindung sieht auch vor, daß dem den Doppelexzenter tragenden Wellenstumpf der Abtriebsachse im Getriebegehäuse ein koaxiales, ortsfestes Gegenlager zugeordnet ist, das eine exzentrische Gegenmassenscheibe trägt, die ihrerseits über einen Kulissenstein die Exzenterachse des Verdrängerkolbenpleuels verbunden ist.

Zweckmäßig kann dabei das freie Ende des Arbeitskolbenpleuels drehbar dem Anlenkhebel und mindestens einer Arbeitskolbenstange zugeordnet sein, wie dies die Erfindung ebenfalls vorsieht.

In vorteilhafter Ausgestaltung ist vorgesehen, daß das freie Ende des Arbeitskolbenpleuels koaxial das Lager des schwenkbaren Anlenkhebels trägt, dessen zweiter schwenkbarer Anlenkpunkt am Getriebegehäuse vorgesehen ist.

Diese erfindungsgemäße Führung über Anlenkhebel führt zu einem sehr ruhigen Lauf des Stirlingmotors und sie gewährleistet, daß unter Umständen beim Arbeitskolben auf einen Kreuzkopfpunkt verzichtet werden kann.

Vorteilhaft ist es, wenn der Doppelexzenterscheibe wenigstens ein mitrotierendes Gegengewicht zugeordnet ist, wobei eine Besonderheit der Erfindung in einer weiteren Ausgestaltung darin besteht, daß der Doppelexzenterscheibe ein oszillierender Blindkolben zugeordnet ist, dessen Achse im rechten Winkel zur Hauptkolbenachse steht.

Damit lassen sich in einfacher Weise die Massenkräfte erster Ordnung durch dieses zweite, um 90° verdrehte oszillierende Massensystem auswuchten, wobei das oszillierende Massensystem linear oder mit einem Hebel geführt werden kann.

An dieser Stelle sei bemerkt, daß das weitere oszillierende Massensystem ggf. auch Zusatzfunktionen, wie Verdichten des Arbeitsmediums für Regelungszwecke od. dgl. erfindungsgemäß übernehmen kann.

Zweckmäßig ist es auch, wenn eine auf einer Konsole verschraubte Führungsbuchse für eine Linearführung der Verdrängerkolbenstange vorgesehen ist, so daß es erfindungsgemäß möglich ist, erst nach der Montage ein Justieren zu ermöglichen.

Die Erfindung ist nachstehend anhand der Zeichnung beispielsweise näher erläutert. Die zeigt in
- Fig. 1: die Seitenansicht eines erfindungsgemäßen Stirlingmotors mit teilweise geschnittenem Getriebe,
- Fig. 2: in gleicher Darstellung eine Schnittansicht etwa gemäß Linie II-II in Fig. 1,
- Fig. 2a: eine Schemazeichnung der Fig. 2 sowie in
- Fig. 3: ein Prinzipbild des Stirlingmotors mit Getriebe.

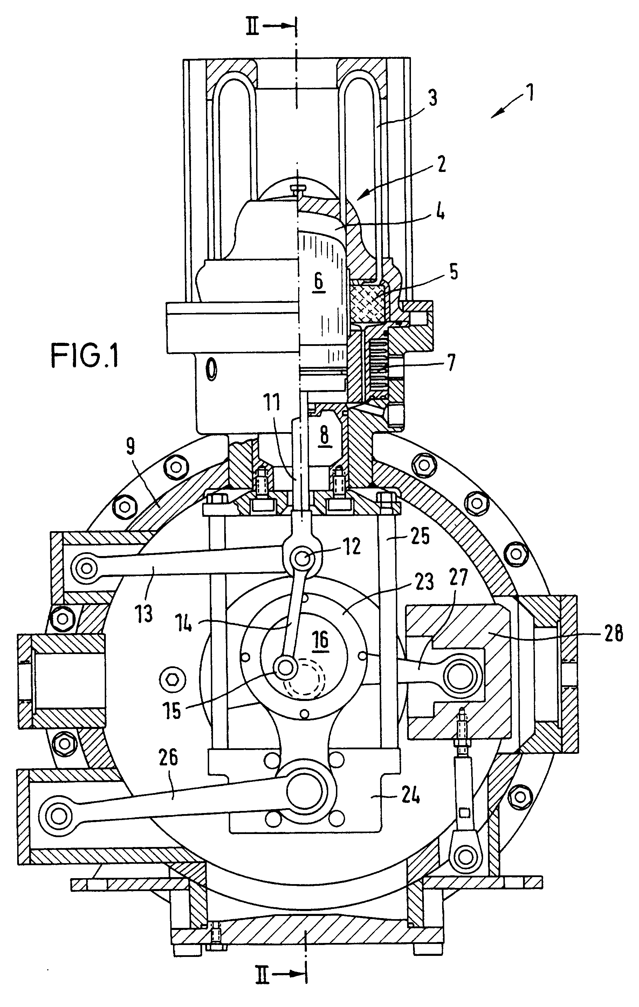

Der allgemein mit 1 bezeichnete Stirlingmotor besteht im wesentlichen aus einem beheizbaren Zylinderkopf 2 mit einer Vielzahl von Erhitzerröhrchen 3, die einerseits in einen Expansionsraum 4 und andererseits in einen Regenerator 5 münden, wobei sich im Expansionsraum 4 oszillierend ein Verdrängerkolben 6 befindet. An dem Regenerator 5 schließt sich ein Kühler 7 zum Abkühlen des Arbeitsmediums an, das einen mit 8 bezeichneten Arbeitskolben beaufschlagt, der in Fig. 1 in der oberen Totpunktlage dargestellt ist.

Für die Erfindung ist die besondere Gestaltung des Getriebes von Bedeutung, das sich in einem allgemein mit 9 bezeichneten Gehäuse befindet, an das beispielsweise ein Generator 10 angeflanscht ist, auf dessen spezielle Gestaltung es hier nicht näher ankommt.

Der Verdrängerkolben 6 weist eine Verdrängerkolbenstange 11 auf, dessen freies Ende 12 mit einem gehäuseseitig schwenkbar gelagerten Anlenkhebel 13 und einem Exzenterhebel 14 andererseits verbunden ist, wobei dieser Exzenterhebel 14 wiederum einer exzentrischen Bohrung 15 einer allgemein mit 16 bezeichneten Doppelexzenterscheibe zugeordnet ist.

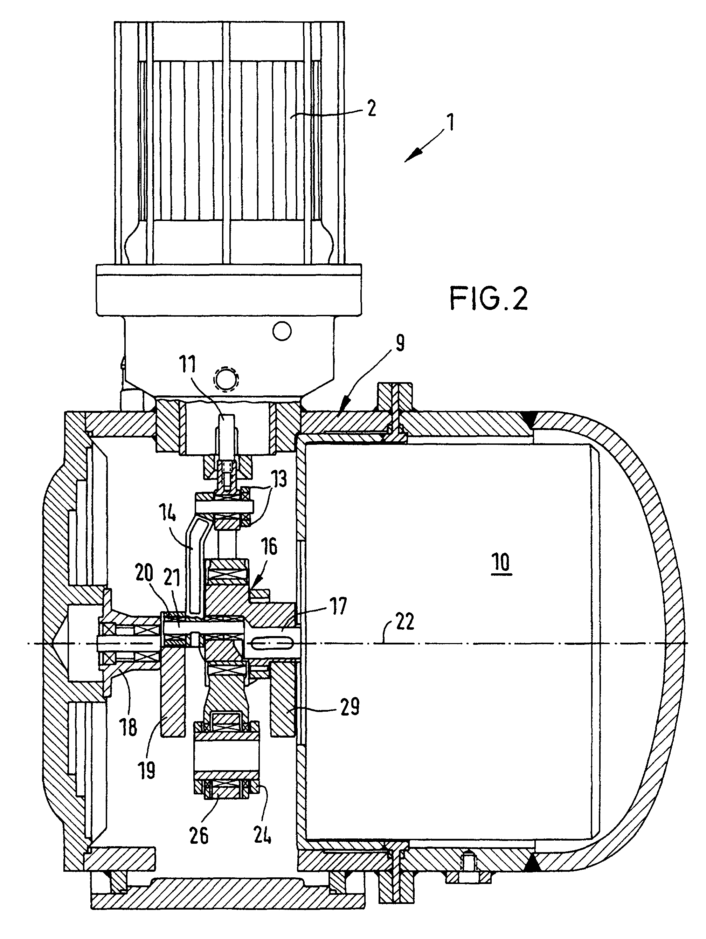

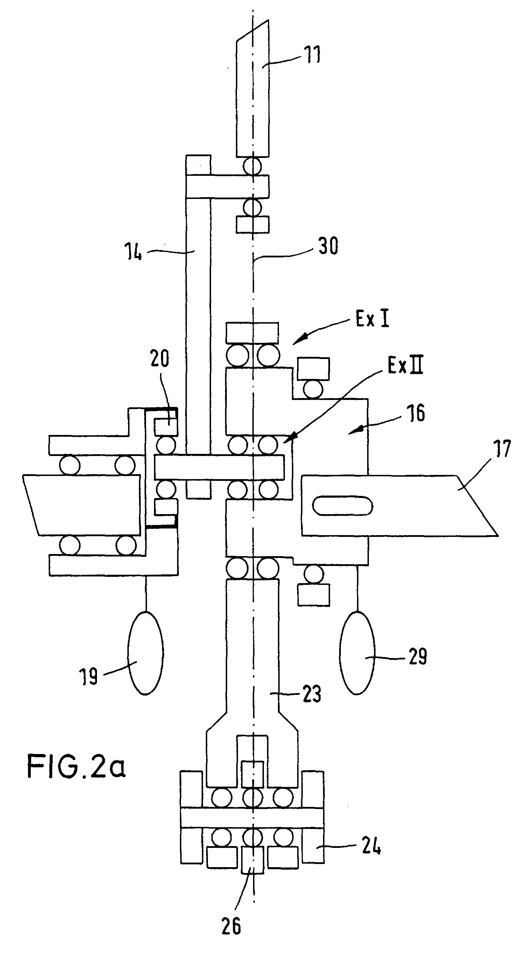

Diese Doppelexzenterscheibe 16 ist, wie sich dies insbesondere aus Fig. 2 ergibt, in einem koaxial zum Generator angeordneten Wellenstumpf 17 gelagert und mittelbar in einem koaxialen Gegenlager 18. Diese mittelbare Lagerung erfolgt derart, daß im Gegenlager 18 eine exzentrische Gegenmassenscheibe 19 gelagert ist, die einen exzentrisch zu ihrer Drehachse im Gegenlager 18 angeordneten Kulissenstein 20 trägt, der wiederum seinerseits die Drehwelle 21 für das freie Ende des Exzenterhebels 14 trägt, der seinerseits in der Exzenterscheibe 16 exzentrisch in der Bohrung 15 gelagert ist. Die Exzenterscheibe 16 ist im dargestellten Beispiel auf ihrer dem Abtrieb 17 zugewandten Seite mit einem Gegengewicht 29 ausgerüstet.

In dem dargestellten Ausführungsbeispiel wird der Außenumfang der Exzenterscheibe 16 exzentrisch zu der mit 22 bezeichneten Zentralachse des Getriebes, die mit der Achse des Generators 10 fluchtet, vom Arbeitskolbenpleuel 23 umgriffen, welches mit seinem freien Ende an einem Lagerbock 24 für Schubstangen 25 befestigt ist, die ihrerseits den Arbeitskolben tragen. Neben der Verbindung des Arbeitskolbenpleuels 23 mit dem Aufnahmeblock für die Schubstangen 25 ist das freie Ende noch drehbar mit einem Anlenkhebel 26 verbunden, der seinerseits wie der Anlenkhebel 13 für den Verdrängerkolben im Gehäuse 9 schwenkbar gelagert ist, wie sich dies insbesondere aus Fig. 1 ergibt.

Beide Anlenkhebel 13 und 26 sorgen für eine im wesentlichen lineare Bewegung der Systemelemente.

Wie sich ebenfalls aus Fig. 1 ergibt ist an der Exzenterscheibe 16 eine weitere Kolbenstange 27 für einen um 90° zur Bewegungsachse des Verdrängerkolbens bzw. Arbeitskolbens positionierter Blindkolben 28 als Auswuchtelement vorgesehen.

Nicht näher dargestellt ist die Möglichkeit, auf einer Konsole eine Führungsbuchse für eine Linearführung der Verdrängerkolbenstange 11 vorzusehen, um zu ermöglichen, daß eine Justierung des Getriebes möglich ist, da diese erst bei der Montage beim Justieren verschraubt werden kann.

In Fig. 2a ist schematisch der prinzipielle Aufbau des Getriebes etwa nach Fig. 2 dargestellt, um zu veranschaulichen, daß die beiden mit EX I und EX II bezeichneten Exzentrizitäten in der Doppelexzenterscheibe 16 praktisch in einer Ebene der Kolbenachse, dort mit 30 bezeichnet, liegen.

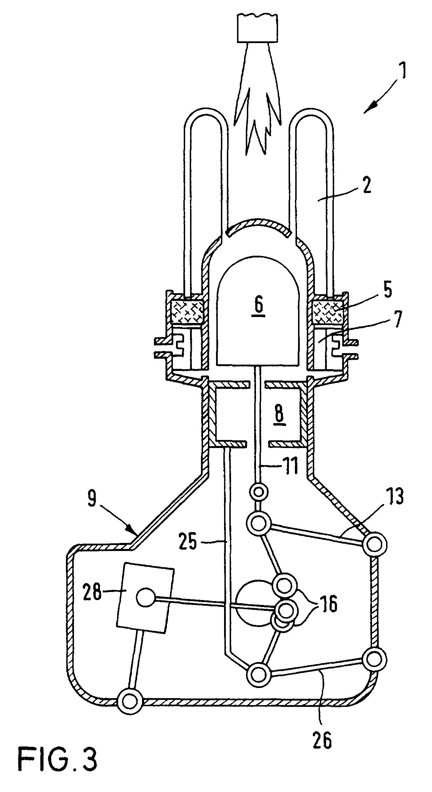

Neben den Fig. 1 und 2 ist in Fig. 3 ein grundsätzliches Funktionsschaubild der Erfindung dargestellt mit gegenüber Fig. 1 einer Drehung um etwa 180°.

Natürlich ist das beschriebene Ausführungsbeispiel der Erfindung noch in vielfacher Hinsicht abzuändern, ohne den Grundgedanken zu verlassen. So ist die Erfindung nicht auf eine besondere Art der Gestaltung des Erhitzer- oder Kühlerteiles des Stirlingmotors beschränkt, auch nicht auf eine bestimmte Art des Abtriebes.

## Patentansprüche

1. Stirlingmotor (1) mit einem beheizbaren Zylinderkopf (2) und mit einem Kühler (7) zum Erhitzen bzw. Kühlen eines Arbeitsmediums sowie mit einem Verdränger- (6) und einem Arbeitskolben (8), die wirkmäßig eine Abtriebsachse (22) beaufschlagen,
**dadurch gekennzeichnet,**
**daß** die Abtriebsachse (22) mit einer Doppelexzenterscheibe (16) ausgerüstet ist, an der zum einen das Arbeitskolbenpleuel (23) und zum anderen das Verdrängerkolbenpleuel (14) angreifen, wobei beide Exzentrizitäten in der Ebene der Kolbenachse liegen.

2. Stirlingmotor nach Anspruch 1,
**dadurch gekennzeichnet,**
**daß** die Außenseite der Doppelexzenterscheibe (16) dem Arbeitskolbenpleuel (23) und eine exzentrische Bohrung (15) in der Doppelexzenterscheibe (16) dem Verdrängerkolbenpleuel (14) zugeordnet ist.

3. Stirlingmotor nach Anspruch 1 oder 2,
**dadurch gekennzeichnet,**
**daß** dem den Doppelexzenter (16) tragenden Wellenstumpf (17) der Abtriebsachse (22) im Getriebegehäuse (9) ein koaxiales, ortsfestes Gegenlager (18) zugeordnet ist, das eine exzentrische Gegenmassenscheibe (19) trägt, die ihrerseits über einen Kulissenstein (20) mit der Exzenterachse (21) des Verdrängerkolbenpleuels (14) verbunden ist.

4. Stirlingmotor nach einem der vorangehenden Ansprüche,
**dadurch gekennzeichnet,**
**daß** das freie Ende des Arbeitskolbenpleuels (23) drehbar den Anlenkhebel (26) und mindestens einer Arbeitskolbenstange (25) zugeordnet ist.

5. Stirlingmotor nach Anspruch 4,
**dadurch gekennzeichnet,**
**daß** das freie Ende des Arbeitskolbenpleuels (23) koaxial das Lager eines schwenkbaren Anlenkhebels (26) trägt, dessen zweiter schwenkbarer Anlenkpunkt am Getriebegehäuse (9) vorgesehen ist.

6. Stirlingmotor nach einem der vorangehenden Ansprüche,
**dadurch gekennzeichnet,**
**daß** der Doppelexzenterscheibe (16) ein mitrotierendes Gegengewicht (19 und/oder 29) zugeordnet ist.

7. Stirlingmotor nach einem der vorangehenden Ansprüche,
**dadurch gekennzeichnet,**
**daß** der Doppelexzenterscheibe (16) ein oszillierender Blindkolben (28) zugeordnet ist, dessen Achse im rechten Winkel zur Hauptkolbenachse steht.

8. Stirlingmotor nach einem der vorangehenden Ansprüche, **gekennzeichnet durch**
eine auf einer Konsole verschraubbaren Führungsbuchse für eine Linearführung der Verdrängerkolbenstange (11).

## Claims

1. Stirling engine (1) with a heatable cylinder head (2) and a radiator (7) for heating or cooling a working medium and with a displacer piston (6) and a working piston (8) which operatively act upon an output shaft (22), **characterised in that** the output shaft (22) is equipped with a double eccentric disc (16) on which firstly the working piston connecting rod (23) and secondly the displacer piston connecting rod (14) engage, both eccentricities being in the plane of the piston axis.

2. Stirling engine according to claim 1, **characterised in that** the outer side of the double eccentric disc (16) is associated with the working piston connecting rod (23), and an eccentric bore (15) in the double eccentric disc (16) is associated with the displacer piston connecting rod (14).

3. Stirling engine according to claim 1 or 2, **characterised in that** a coaxial, stationary thrust bearing (18) is associated with the end (17), bearing the double eccentric (16), of the output shaft (22) in the gearbox casing (9) and this thrust bearing supports an eccentric counterbalance disc (19) which is connected for its part via a link block (20) to the eccentric axis (21) of the displacer piston connecting rod (14).

4. Stirling engine according to one of the preceding claims, **characterised in that** the free end of the working piston connecting rod (23) is rotatably associated with the coupling lever (26) and at least one working piston rod (25).

5. Stirling engine according to claim 4, **characterised in that** the free end of the working piston connecting rod (23) coaxially supports the bearing of a pivotable coupling lever (26), the second pivotable coupling point of which is provided on the gearbox casing (9).

6. Stirling engine according to one of the preceding claims, **characterised in that** a co-rotating balance weight (19 and/or 29) is associated with the double eccentric disc (16).

7. Stirling engine according to one of the preceding claims, **characterised in that** there is associated with the double eccentric disc (16) an oscillating blind piston (28), the axis of which sits at a right angle to the main piston axis.

8. Stirling engine according to one of the preceding claims,
**characterised by**
a guide bush, which can be screwed to a bracket, for a linear guide of the displacer piston rod (11).

## Revendications

1. Moteur stirling (1) ayant une culasse de cylindre pouvant être chauffée (2) et un radiateur (7) pour le chauffage ou le refroidissement d'un fluide moteur, ainsi qu'un piston pousseur (6) et un piston moteur (8) qui alimentent effectivement un essieu d'entraînement (22), **caractérisé en ce que** l'essieu d'entraînement (22) est équipé d'un disque de l'excentrique double (16) avec lequel s'engagent d'une part la bielle du piston moteur (23) et d'autre part la bielle du piston pousseur (14), les deux excentricités se situant dans le plan de l'axe de piston.

2. Moteur stirling selon la revendication 1, **caractérisé en ce que** la face extérieure du disque de l'excentrique double (16) est adjointe à la bielle du piston moteur (23) et un alésage excentrique (15) dans le disque de l'excentrique double (16) à la bille du piston pousseur (14).

3. Moteur stirling selon l'une des revendications 1 ou 2, **caractérisé en ce qu'**une butée coaxiale fixe (18) est adjointe au bout d'arbre (17) de l'essieu d'entraînement (22) supportant le double excentrique (16) dans le carter de boîte de vitesses (9), laquelle butée supporte un disque de contre-masse excentrique (19), qui est quant à lui relié au moyen d'un coulisseau (20) à l'essieu excentrique (21) de la bielle du piston pousseur (14).

4. Moteur stirling selon l'une des revendications précédentes, **caractérisé en ce que** l'extrémité libre de la bielle du piston moteur (23) est adjointe de manière pivotante au levier articulé (26) et au moins à un arbre de piston moteur (25).

5. Moteur stirling selon la revendication 4, **caractérisé en ce que** l'extrémité libre de la bielle du piston moteur (23) supporte de façon coaxiale le palier d'un levier articulé orientable (26), dont le deuxième point d'articulation orientable est prévu sur le carter de la boîte de vitesses (9).

6. Moteur stirling selon l'une des revendications précédentes, **caractérisé en ce qu'**un contre-poids en rotation conjointe (19 et/ou 29) est adjoint au disque de l'excentrique double (16).

7. Moteur stirling selon l'une des revendications précédentes, **caractérisé en ce qu'**un piston aveugle oscillant (28) dont l'axe forme un angle droit avec l'axe du piston principal est adjoint au disque de l'excentrique double (16).

8. Moteur stirling selon l'une des revendications précédentes, **caractérisé par** une boîte conductrice pouvant être vissée sur une console pour un guidage linéaire de l'arbre du piston pousseur (11).
